# FASCICULE DE BREVET EUROPEEN

(11) **EP 2 205 465 B1**
(45) Date de publication et mention de la délivrance du brevet: **03.07.2013**
(21) Numéro de dépôt: 08863232.8
(22) Date de dépôt: 04.11.2008
(51) Int. Cl.: B60R 19/48, H04R 1/34, B60Q 9/00, B60W 30/06

(54) **MONTAGE DE CAPTEURS D'AIDE AU STATIONNEMENT SANS INTERFERENCE**
INTERFERENZENFREIE PARKHILFE-SENSORBAUGRUPPE
INTERFERENCE-FREE PARKING-ASSISTANCE SENSOR ASSEMBLY

(30) Priorité: 05.11.2007 FR 0707765
(43) Date de publication de la demande: 14.07.2010
(73) Titulaire: Renault S.A.S., 92100 Boulogne-Billancourt (FR)
(72) Inventeur: PETRA, Jean-Marc, F-91140 Villebon-sur-Yvette (FR); VEUILLOT, Olivier, F-94450 Limeil Brevannes (FR)
(86) Numéro de dépôt international: PCT/FR2008/051982
(87) Numéro de publication internationale: WO 2009/077686

(56) Documents cités:
- EP-A- 1 724 153
- WO-A-97/48578
- GB-A- 2 349 469

## Description

L'invention concerne un agencement pour la fixation d'un capteur sur un véhicule automobile et un véhicule automobile en tant que tel incluant un tel agencement.

Le développement de fonctionnalités comme celle d'aide au stationnement au sein d'un véhicule automobile nécessite l'intégration de capteurs, par exemple de type ultrason, au niveau du bouclier avant d'un véhicule automobile. De tels capteurs permettent de recueillir une perception automatique de l'environnement du véhicule et notamment de détecter la présence d'obstacle. Le document US20060267359 décrit un agencement d'un tel capteur sur un véhicule automobile.

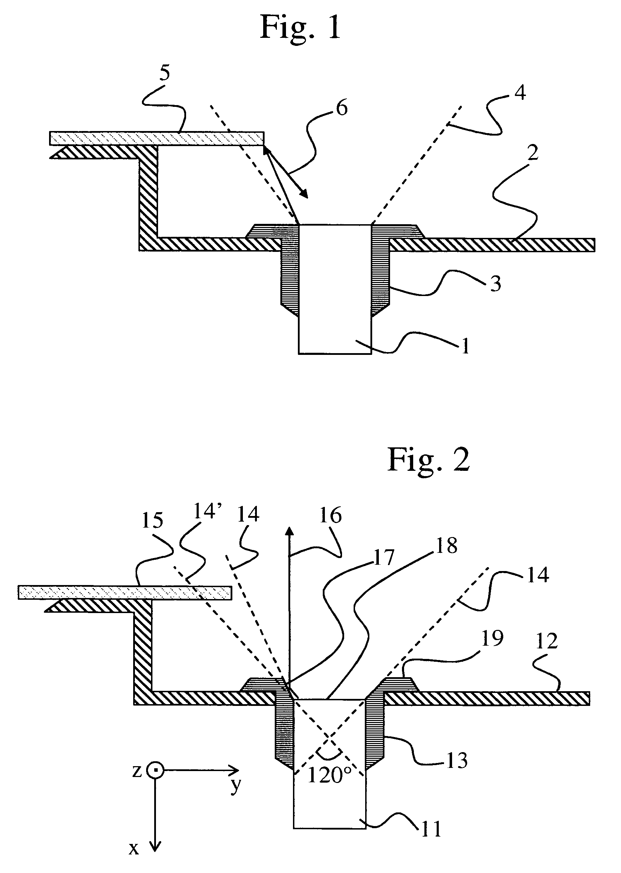

Les agencements de l'état de la technique présentent tous l'inconvénient illustré sur la figure 1, qui représente un capteur ultrason 1 monté au sein d'un bouclier 2 du pare-choc avant d'un véhicule automobile, par l'intermédiaire d'un enjoliveur 3, dans une zone centrale de la partie antérieure du véhicule automobile, pour éviter les zones des grilles d'entrée d'air disposées latéralement. Dans cette position, le capteur ultrason 1 génère des émissions dans un cône de détection 4 présentant un angle par exemple de 120° dans un plan horizontal (90° dans un plan vertical). Dans une telle configuration sur certains véhicules automobiles, la plaque de police 5 pénètre partiellement dans ce cône de détection 4. Ainsi, certains rayons ultrasons 6 transmis par le capteur 1 sont réfléchis par la propre plaque de police 5 du véhicule automobile, selon un phénomène que nous qualifierons d'interférence, ce qui induit une mauvaise perception de l'environnement du véhicule et un dysfonctionnement des dispositifs d'assistance basés sur les informations recueillies par le capteur.

Un but général de l'invention est donc de fournir une solution ne présentant pas l'inconvénient précédent.

A cet effet, l'invention a pour objet un agencement pour la fixation d'un capteur sur un véhicule automobile l'agencement comprenant un logement pour recevoir un capteur ultrason, et présentant au moins un moyen d'obstruction apte à réduire l'angle du cône de détection du capteur positionné dans le logement, le moyen d'obstruction étant une portion de cône formée par une paroi oblique s'étendant au-delà de la face extérieure d'émission du capteur positionné dans le logement, la paroi oblique s'étendant suffisamment en longueur pour que la face extérieure d'émission du capteur positionné dans le logement se trouve en retrait de quelques millimètres par rapport au plan extérieur de l'agencement.

Le moyen d'obstruction peut être obtenu par un enjoliveur.

Le moyen d'obstruction peut être dissymétrique ou symétrique.

Selon l'invention, un véhicule automobile comprend un agencement défini précédemment et un capteur positionné dans le logement de l'agencement.

Le véhicule automobile peut comprendre un capteur monté dans une partie centrale du bouclier avant du véhicule automobile et le moyen d'obstruction peut réduire le cône de détection naturel du capteur de sorte que la génératrice du cône réduit échappe à la plaque de police du véhicule pour ne pas générer d'interférence.

Le capteur peut être un capteur ultrason d'un dispositif d'aide au stationnement.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une vue schématique en coupe selon un plan horizontal d'un agencement selon l'état de la technique ;
la figure 2 représente une vue schématique en coupe selon un plan horizontal d'un agencement selon le mode d'exécution de l'invention ;
la figure 3 représente une vue schématique en coupe selon un plan vertical d'un agencement selon le mode d'exécution de l'invention.

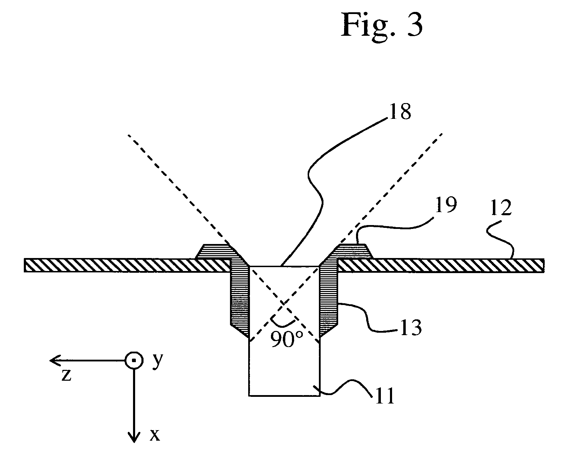

Les figures 2 et 3 illustrent un mode d'exécution d'un agencement selon l'invention, qui représente un capteur ultrason 11 d'un dispositif d'assistance au stationnement disposé dans un logement aménagé au sein du bouclier 12 d'un véhicule automobile par l'intermédiaire d'un enjoliveur 13. Ce capteur est positionné dans une partie centrale du bouclier du véhicule, au voisinage de la plaque de police 15 du véhicule.

Selon l'invention, l'enjoliveur 13 forme un moyen d'obstruction d'une partie du cône de détection naturel 14' du capteur 11, de sorte que le cône de détection 14 réel résultant n'entre plus en interférence avec la plaque de police 15 du véhicule. Pour cela, l'enjoliveur 13 présente une paroi latérale oblique 17 en forme de portion de cône qui s'étend vers l'avant depuis les côtés de la face antérieure 18 du capteur, de sorte que les rayons 16 les plus extrêmes émis par le capteur, et notamment ceux orientés vers la plaque de police 15, sont réfléchis par ces parois latérales 17 qui forment bien un moyen d'obstruction. Ainsi, plus aucun rayon émis par le capteur 11 n'est réfléchi par la plaque de police 15. L'angle d'inclinaison de la partie oblique 17 de l'enjoliveur 13 formant le moyen d'obstruction, inférieur à 120° dans un plan horizontal et/ou inférieur à 90° dans un plan vertical pour l'exemple donné, impose ainsi son angle au cône de détection 14 du capteur. La face avant d'émission 18 de ce dernier ne vient plus sensiblement dans le même plan que le plan 19 formé par la partie antérieure de l'enjoliveur 13 mais reste en retrait par rapport à ce plan. Cette configuration améliore l'esthétique globale des capteurs en évitant qu'ils ne soient trop avancés et rendent une perception désagréable d'effet « mitraillette ».

L'agencement est positionné sur le véhicule automobile de sorte que le bord de la plaque de police 15 vienne s'arrêter au niveau de la génératrice 14 du cône de détection, de façon à positionner le capteur dans la partie la plus centrale du véhicule. Cela permet ainsi de positionner le capteur de manière plus proche du centre du véhicule qu'avec la solution de l'état de la technique, sans rencontrer de problème d'interférence avec la plaque de police. Cette solution présente l'avantage de pouvoir par exemple éloigner le capteur de la zone d'entrée d'air du véhicule automobile et d'éviter que son positionnement ait une influence sur le dispositif de refroidissement du moteur. Naturellement, l'agencement décrit pourrait aussi occuper d'autres positions et ne se limite pas à la partie antérieure centrale du véhicule.

Le problème technique résolu selon le schéma de la figure 2 ne se pose que d'un seul côté du capteur, celui où se trouve la plaque de police, à gauche sur la figure. Il est donc possible de prévoir un moyen d'obstruction uniquement de ce côté et donc un enjoliveur dissymétrique. Toutefois, pour rendre l'enjoliveur indifféremment positionnable à droite ou à gauche de la plaque de police, et pour des raisons esthétiques, il est possible de le prévoir symétrique, ses deux parois obliques antérieures présentant alors le même angle.

Le moyen d'obstruction a été obtenu par une paroi oblique et donc une portion de cône de la partie latérale antérieure de l'enjoliveur. Cette forme est particulièrement optimale puisque le capteur présente une émission comprise dans un cône. Toutefois, le moyen d'obstruction pourrait présenter toute autre forme qui permettrait de réduire, sans provoquer d'interférence naturellement, le cône de détection naturel du capteur, c'est-à-dire celui obtenu dans une situation sans aucune obstruction. La solution est donc adaptée à la recherche de formes esthétiques attrayantes et contribue ainsi à l'amélioration de la perception esthétique globale du véhicule automobile.

De plus, le moyen d'obstruction a été formé par l'intermédiaire d'un enjoliveur, ce qui est une solution simple et flexible, car cet enjoliveur peut facilement être adapté aux conditions particulières rencontrées. Toutefois, il pourrait être obtenu de manière similaire avec une partie du bouclier lui-même en l'absence d'enjoliveur, ou par tout autre élément du véhicule automobile formant un logement pour capteur.

L'agencement selon l'invention permet l'utilisation de capteurs standards à angles de détection très ouverts (supérieur à 90° dans le plan vertical et supérieur à 120° dans le plan horizontal pour reprendre l'exemple cité). Les cônes de détection sont ensuite optimisés pour chaque capteur et pour chaque véhicule, ce qui augmente les latitudes de positionnement en hauteur, largeur et angulaire.

Par exemple, un capteur peut être positionné très bas, le cône étant :
- tronqué, en zone inférieure, par le bouclier pour ne pas détecter le sol,
- ouvert en zone supérieure pour compenser sa position basse et détecter les obstacles « hauts ».

Autre exemple, l'écartement horizontal entre les capteurs peut être augmenté, compensé par une ouverture des cônes plus importante pour détecter un poteau situé entre les capteurs.

Une plus grande liberté est donc donnée au designer pour positionner les capteurs dans le véhicule.

La solution a été présentée dans le cas d'un capteur ultrasons mais le concept pourrait être implémenté avec d'autres types de capteurs. De plus, la solution a été présentée dans le cas particulier d'interférences avec la plaque de police. La même solution peut bien sûr répondre à toute autre interférence qui pourrait se poser sur une partie quelconque du véhicule automobile, par exemple dans la partie avant avec une grille d'entrée d'air, sur la partie arrière avec un dispositif d'attelage ou le dispositif d'échappement. La solution proposée offre plus de flexibilité pour le positionnement d'un capteur, qui peut en effet être positionné dans certaines zones du véhicule sans rencontrer les problèmes d'interférence qui étaient rencontrés avec les solutions de l'état de la technique.

## Revendications

1. Agencement pour la fixation d'un capteur (11) sur un véhicule automobile, **caractérisé en ce qu'**il comprend un logement pour recevoir un capteur ultrason, et présente au moins un moyen d'obstruction apte à réduire l'angle du cône de détection (14') du capteur positionné dans le logement, le moyen d'obstruction étant une portion de cône formée par une paroi oblique (17) s'étendant au-delà de la face extérieure d'émission (18) du capteur (11) positionné dans le logement, la paroi oblique (17) s'étendant suffisamment en longueur pour que la face extérieure d'émission (18) du capteur (11) positionné dans le logement se trouve en retrait de quelques millimètres par rapport au plan extérieur (19) de l'agencement.

2. Agencement pour la fixation d'un capteur selon la revendication 1, **caractérisé en ce que** le moyen d'obstruction est obtenu par un enjoliveur (13).

3. Agencement pour la fixation d'un capteur la revendication 1 ou 2, **caractérisé en ce que** le moyen d'obstruction est dissymétrique ou symétrique.

4. Véhicule automobile comprenant un agencement selon une des revendications précédentes et un capteur (11) positionné dans le logement de l'agencement.

5. Véhicule automobile selon la revendication précédente, **caractérisé en ce qu'**il comprend un capteur (11) monté dans une partie centrale du bouclier avant (12) du véhicule automobile et **en ce que** le moyen d'obstruction réduit le cône de détection naturel (14') du capteur de sorte que la génératrice du cône réduit (14) échappe à la plaque de police (15) du véhicule pour ne pas générer d'interférence.

6. Véhicule automobile selon la revendication 4 ou 5, **caractérisé en ce que** le capteur (11) est un capteur ultrason d'un dispositif d'aide au stationnement.

## Patentansprüche

1. Anordnung zur Befestigung eines Sensors (11) an einem Kraftfahrzeug, **dadurch gekennzeichnet, dass** sie eine Aufnahme enthält, um einen Ultraschallsensor aufzunehmen, und mindestens eine Sperreinrichtung aufweist, die den Winkel des Erfassungskegels (14') des in der Aufnahme positionierten Sensors verringern kann, wobei die Sperreinrichtung ein Kegelabschnitt ist, der von einer schrägen Wand (17) geformt wird, die sich jenseits der Sendeaußenseite (18) des in der Aufnahme positionierten Sensors (11) befindet, wobei die schräge Wand (17) sich in der Länge ausreichend ausdehnt, damit die Sendeaußenseite (18) des in der Aufnahme positionierten Sensors (11) sich bezüglich der Außenebene (19) der Anordnung um einige Millimeter zurückversetzt befindet.

2. Anordnung zur Befestigung eines Sensors nach Anspruch 1, **dadurch gekennzeichnet, dass** die Sperreinrichtung durch eine Zierleiste (13) erhalten wird.

3. Anordnung zur Befestigung eines Sensors nach Anspruch 1 oder 2, **dadurch gekennzeichnet, dass** die Sperreinrichtung unsymmetrisch oder symmetrisch ist.

4. Kraftfahrzeug, das eine Anordnung nach einem der vorhergehenden Ansprüche und einen in der Aufnahme der Anordnung positionierten Sensor (11) enthält.

5. Kraftfahrzeug nach dem vorhergehenden Anspruch, **dadurch gekennzeichnet, dass** es einen Sensor (11) enthält, der in einen zentralen Bereich des vorderen Stoßfängers (12) des Fahrzeugs montiert ist, und dass die Sperreinrichtung den natürlichen Erfassungskegel (14') des Sensors so verringert, dass die Mantellinie des verringerten Kegels (14) aus dem Kennzeichen (15) des Fahrzeugs austritt, um keine Interferenz zu erzeugen.

6. Kraftfahrzeug nach Anspruch 4 oder 5, **dadurch gekennzeichnet, dass** der Sensor (11) ein Ultraschallsensor einer Einparkhilfevorrichtung ist.

## Claims

1. Arrangement for attaching a sensor (11) to a motor vehicle, **characterized in that** it comprises a housing to house an ultrasound sensor, and has at least one obstruction means able to reduce the angle of the detection cone (14') of the sensor positioned in the housing, the obstruction means being a cone portion formed by an oblique wall (17) extending beyond the exterior emission face (18) of the sensor (11) positioned in the housing, the oblique wall (17) extending over a sufficient length so that the external emission face (18) of the sensor (11) positioned in the housing is set back by a few millimetres from the external plane (19) of the arrangement.

2. Arrangement for attaching a sensor according to Claim 1, **characterized in that** the obstruction means is obtained using a trim (13).

3. Arrangement for attaching a sensor according to Claim 1 or 2, **characterized in that** the obstruction means is asymmetric or symmetric.

4. Motor vehicle comprising an arrangement according to one of the preceding claims and a sensor (11) positioned in the housing of the arrangement.

5. Motor vehicle according to the preceding claim **characterized in that** it comprises a sensor (11) mounted in a central part of the front bumper (12) of the motor vehicle and **in that** the obstruction means reduces the natural detection cone (14') of the sensor in such a way that the generatrix of the reduced cone (14) does not impinge on the registration plate (15) of the vehicle, in order not to generate interference.

6. Motor vehicle according to Claim 4 or 5, **characterized in that** the sensor (11) is an ultrasound sensor of a parking assist system.
